# FASCICULE DE BREVET EUROPEEN

(11) **EP 1 249 618 B1**
(45) Date de publication et mention de la délivrance du brevet: **20.06.2007**
(21) Numéro de dépôt: 02290901.4
(22) Date de dépôt: 11.04.2002
(51) Int. Cl.: F04D 29/70, F02C 7/052, F01D 17/10, F02K 3/04

(54) **Système de décharge pour turboréacteur ou turbopropulseur à commande simplifiée**
Abblassystem für ein Bläsertriebwerk mit vereinfachter Regelung
Bleed system for a turbofan with simplified control

(30) Priorité: 12.04.2001 FR 0105017
(43) Date de publication de la demande: 16.10.2002
(73) Titulaire: SNECMA, 75015 Paris (FR)
(72) Inventeur: Brault, Michel Gilbert, 91800 Boussy Saint Antoine (FR); Brossier, Pascal Noel, 77630 Saint Martin en Bière (FR)

(56) Documents cités:
- EP-A- 0 902 179
- GB-A- 936 635
- GB-A- 987 625
- GB-A- 2 014 663
- US-A- 4 086 761
- US-A- 4 463 552

## Description

L'invention concerne le domaine des turbomachines à double flux et plus particulièrement des turboréacteurs d'aviation à double flux.

Dans un turboréacteur à double flux et à grand taux de dilution, il est prévu dans le flux primaire d'amont en aval dans le sens de l'écoulement des gaz, un compresseur à basse pression, suivi d'un compresseur à haute pression qui amène de l'air comprimé à une chambre à combustion dans laquelle l'air est mélangé à du carburant sous pression que l'on brûle pour donner en aval de la chambre de l'énergie à une turbine à haute pression entraînant le compresseur à haute pression, puis à une turbine à basse pression entraînant la soufflante et le compresseur à basse pression. Les gaz en sortie des turbines fournissent une poussée résiduelle qui s'ajoute à la poussée générée par les gaz circulant dans la veine secondaire, ces poussées étant nécessaires pour la propulsion de l'aéronef.

Dans certaines conditions de vol, à charge partielle par exemple, lors de la phase de descente de l'aéronef, la quantité d'air délivrée par le compresseur à basse pression peut être trop élevée pour le fonctionnement correct du moteur, aussi est-il nécessaire de dévier une partie de cet air vers la veine secondaire, pour éviter l'apparition du phénomène dit de pompage dû au décollement des filets fluides le long des aubes, entraînant une instabilité de l'écoulement.

En outre, lorsque l'aéronef traverse des nuages de grand volume, des quantités d'eau sous forme de pluies ou de grêle peuvent alors pénétrer dans les compresseurs. Si le moteur est en régime de plein gaz, l'eau est vaporisée et est à un état de vapeur suffisamment chaude et pulvérisée pour ne pas provoquer l'extinction de la chambre de combustion qui est alimentée par un débit important de carburant. En revanche, si l'aéronef est dans la phase de descente ou d'approche avant atterrissage, le moteur tourne au ralenti, le taux de compression des compresseurs est relativement faible et de l'eau à l'état liquide ou solide peut arriver jusqu'à la chambre de combustion et éteindre la combustion d'un des brûleurs, voire de tous, la quantité de carburant délivré étant relativement faible. Ceci peut entraîner des conséquences graves.

C'est pourquoi les dispositifs de décharge des turboréacteurs sont en général équipés d'écopes mobiles qui peuvent pénétrer sous l'action d'organes de commande complexes, dans la veine primaire dans l'espace annulaire séparant le compresseur à basse pression du compresseur à haute pression. Cet espace annulaire se présentant axialement sous la forme d'un col de cygne, les particules d'eau qui, du fait de leur masse spécifique, circulent le long de la paroi externe de la veine primaire, sont piégées par les écopes et déviées vers la veine secondaire.

GB 2 259 328 dévoile un tel dispositif de décharge dans lequel les écopes sont actionnées par un dispositif de synchronisation disposé dans le carter intermédiaire afin de diriger l'air prélevé et les particules vers des tubes fixes qui l'évacuent dans la veine secondaire en aval des bras de support du moteur.

EP 0 407 297 prévoit dans les parois interne et externe du carter inter-veine des trappes actionnées en synchronisme et mobiles radialement vers l'extérieur.

EP 0 374 004 prévoit également dans la paroi externe de la veine primaire des trappes associées à un dispositif d'écopage.

Dans tous ces dispositifs de décharge, les organes de commande des écopes et des trappes sont disposés dans le carter interveine et fonctionnent en synchronisme. Ces organes de commande, comportant un anneau de commande, des biellettes, des vérins hydrauliques ou des câbles pour actionner des trappes ou écopes articulées, sont relativement complexes et sont en outre difficilement accessibles lors des opérations inévitables d'entretien et de maintenance.

Le but de l'invention est de proposer une turbomachine à double flux, dans lequel les moyens de décharge sont essentiellement constitués d'éléments statiques.

L'invention concerne donc une turbomachine à double flux, notamment un turboréacteur d'aviation à double flux, qui comporte, entre la veine primaire et la veine secondaire, un carter intermédiaire structural disposé axialement entre un compresseur à basse pression et un compresseur à haute pression, et qui comporte des moyens de décharge permettant la déviation d'une partie du flux gazeux délivré par le compresseur à basse pression vers la veine secondaire.

Cette turbomachine est caractérisée par le fait que les moyens de décharge comportent une cavité annulaire formant collecteur située en amont du carter intermédiaire dans la paroi externe de la veine primaire et en communication permanente avec la veine primaire, une pluralité de conduits sensiblement axiaux ménagés dans le carter intermédiaire et raccordés audit collecteur, et une pluralité de tubes disposés autour du compresseur à haute pression pour mettre en communication lesdits conduits avec la veine secondaire, lesdits tubes étant équipés de vannes de réglage de débit.

Avantageusement, le carter intermédiaire et les conduits sont réalisés en une seule pièce de fonderie. Le carter intermédiaire comporte une pluralité de bras radiaux et les conduits sont disposés entre lesdits bras radiaux.

De préférence le collecteur communique avec la veine primaire par une pluralité d'orifices ménagés dans la paroi externe de la veine interne et formant une grille.

Très avantageusement, les vannes de réglage de débit sont réglables séparément.

Ainsi, lorsque toutes les vannes de réglage de débit sont dans la position ouverte, un grand débit d'air est prélevé dans la veine primaire et est dirigé vers la veine secondaire via le collecteur annulaire, les conduits et les tubes.

Lorsque seule une vanne de réglage de débit est ouverte, un faible débit d'air est prélevé dans la veine primaire. Ce faible débit d'air provenant de la zone radialement externe de la veine primaire est riche en particules d'eau. Le dispositif de décharge joue alors le rôle de piège à particule. Cette même fonction est également obtenue lorsque toutes les vannes sont réglées dans une position de faible débit.

La grille séparant la veine primaire du collecteur assure la continuité aérodynamique de la veine primaire lorsque les vannes de réglage de débit sont fermées.

Les conduits réalisés en une seule pièce avec le carter intermédiaire permettent d'augmenter avantageusement la rigidité du carter intermédiaire.

Dans le dispositif de décharge proposé, il n'y a aucun mécanisme mobile en contact avec la veine primaire et aucun mécanisme mobile dans le carter intermédiaire structural. Les vannes de réglage de débit disposées dans les tubes autour du compresseur à haute pression sont des ensembles facilement interchangeables pour la maintenance. En outre, il n'y a pas de dispositif d'étanchéité compliqué comme des joints autour des trappes et des écopes.

D'autres avantages et caractéristiques de l'invention ressortiront à la lecture de la description suivante faite à titre d'exemple et en référence aux dessins annexés, dans lesquels :

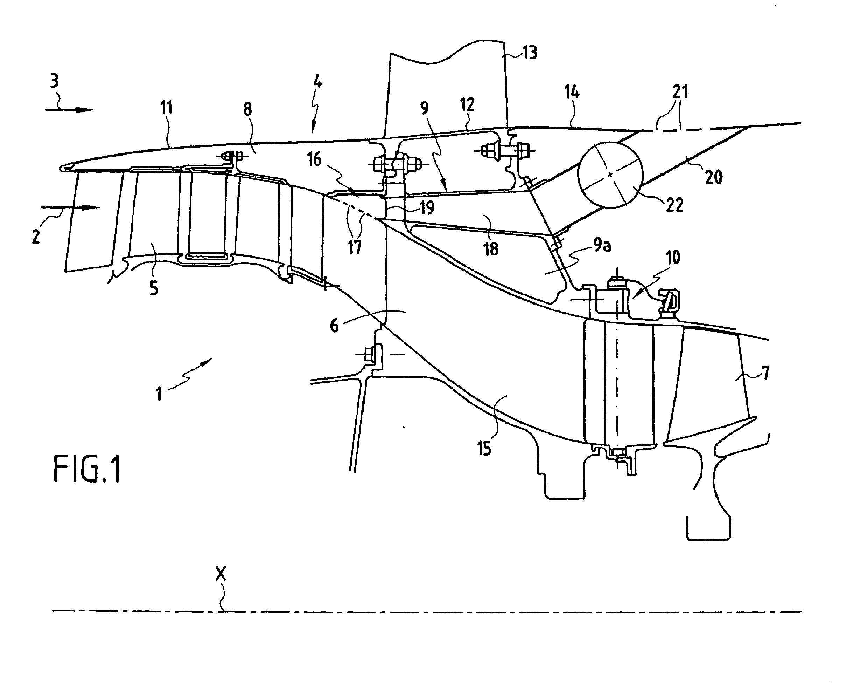

La figure 1 est une demi-coupe longitudinale du carter interveine et de la partie amont de la veine primaire qui montre le dispositif de décharge d'un turboréacteur selon l'invention ; et
la figure 2 est une vue frontale en perspective d'une partie du carter intermédiaire.

Comme illustré sur les dessins, un turboréacteur 1 à double flux d'axe x, comporte dans sa zone avant une soufflante non montrée sur les dessins, qui fournit de l'air à une veine d'air primaire 2 et une veine d'air secondaire 3 annulaires et séparées par un carter interveine 4.

Dans la veine primaire 2 sont implantés successivement, d'amont en aval, un compresseur à basse pression 5, un conduit annulaire 6 ayant une section en forme de col de cygne, et un compresseur à haute pression 7 qui délivre de l'air comprimé à une chambre de combustion non montrée sur les dessins.

Le carter interveine 4 comprend, d'amont en aval, un becquet séparateur de flux 8 dont la paroi interne constitue le stator du compresseur à basse pression 5, un carter intermédiaire 9 structural comportant, dans sa zone interne, le conduit annulaire 6 en forme de col de cygne, et le stator 10 du compresseur à haute pression 7.

La veine secondaire 3 est délimitée intérieurement par la paroi externe 11 du becquet 8, les plate-formes internes 12 de bras de support 13 du moteur qui traversent la veine secondaire 3 et qui sont fixés sur le pourtour du carter intermédiaire 9 au moyen de brides, et de capots 14 entourant le stator 10 du compresseur à haute pression 7.

Le carter intermédiaire 9 présente à l'intérieur du conduit annulaire 6 une pluralité de bras radiaux 15 destinés à transmettre les efforts générés par la soufflante aux bras de support 13 via la partie annulaire 9a du carter intermédiaire 9 qui entoure le conduit annulaire 6.

Selon l'invention, le becquet séparateur 8 comporte dans sa région interne adjacente au carter intermédiaire 9, une cavité annulaire 16, entourant la veine primaire 2 et disposée axialement entre le dernier étage du compresseur à basse pression 5 et les bras radiaux 15.

Cette cavité annulaire 16 est en communication permanente avec la veine primaire 2 au moyen par exemple d'une pluralité d'orifices 17, formant une grille, ménagés dans la zone de paroi externe de la veine primaire 2 délimitant la cavité 16. Cette cavité 16 débouche sur la face arrière du becquet séparateur 8.

La partie annulaire 9a du carter intermédiaire 9, qui entoure le conduit annulaire 6, comporte une pluralité de conduits 18 sensiblement axiaux qui débouchent en amont par des orifices 19 dans la cavité annulaire 16 et en aval dans la face arrière de cette partie annulaire 9a.

Ces conduits 18 sont prolongés autour du stator 10 du compresseur à haute pression 7 par des tubes obliques 20 qui débouchent dans la veine secondaire 3 par des orifices 21 ménagés dans les capots 14.

Chaque tube 20 comporte sa propre vanne de réglage de débit 22 qui peut être réglée séparément. Cette vanne de réglage peut être de n'importe quel type, par exemple à guillotine, à boisseau sphérique, et l'axe de pivotement de la vanne est indifférent. La disposition de ces vannes 22 autour du compresseur à haute pression 7 facilite leur accès pour la maintenance, car il suffit d'ouvrir les capots externes 14 du carter interveine pour avoir accès aux vannes 22.

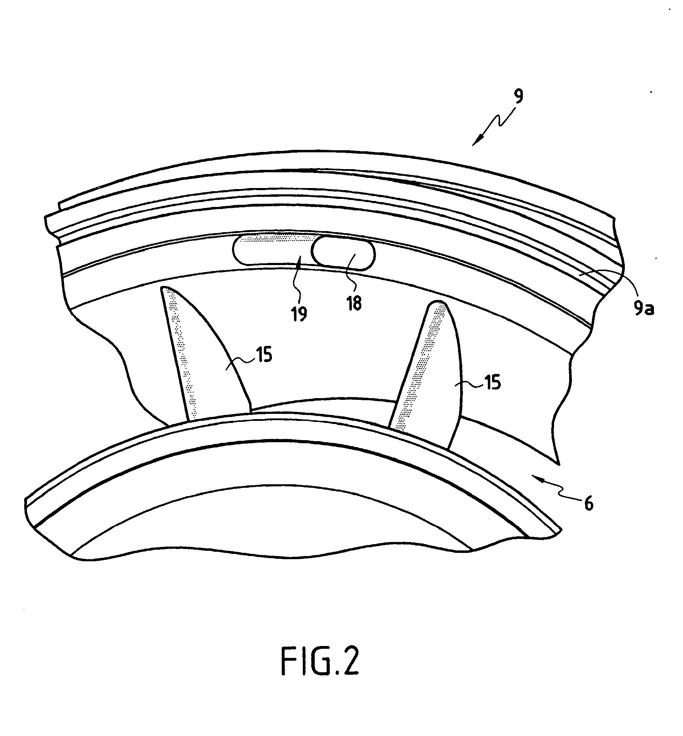

Ainsi que cela se voit sur la figure 2, les conduits 18 sont disposés de préférence dans l'espace circonférentiel séparant deux bras radiaux 15 adjacents qui se prolongent dans la partie annulaire externe 9a du carter intermédiaire.

Très avantageusement, les conduits 18 et le carter intermédiaire 9 sont réalisés en une seule pièce de fonderie ou mécanosoudée. La présence des conduits 18 disposés axialement permet de renforcer la structure du carter intermédiaire 9 pour le passage des efforts issus notamment de la soufflante.

La présence de la cavité 16 qui fait office de collecteur à l'extérieur du carter intermédiaire 9 avec sa grille de captage d'air dans la veine primaire 2, évite la présence d'orifices de captage entre les bras radiaux 15 dans la paroi du carter intermédiaire 9 qui entoure la veine primaire 2 ce qui simplifie la fonderie et l'usinage du carter intermédiaire 9.

Le captage de l'air de décharge se fait ainsi par l'intermédiaire d'une grille annulaire présentant les orifices 17. Ceci limite les distorsions aérodynamiques au niveau du compresseur à haute pression 7.

Le fonctionnement du système de décharge se comprend aisément.

Lorsque les vannes 22 de réglage de débit dans les tubes 20 sont fermées, aucun débit d'air ne passe par les tubes 20. Par le fait même, aucun débit d'air ne transite par les conduits 18. L'air dans la cavité 16 et les conduits 18 se met à une pression donnée en fonction du régime du moteur. Aucun air ne passe par les orifices 17 de la grille qui assure alors la continuité aérodynamique de la paroi externe de la veine primaire 2.

Lorsque l'ensemble des vannes 22 est réglé dans une position de débit faible, ou une seule vanne 22 est dans la position grande ouverte et les autres vannes fermées, un faible débit d'air pénètre par les orifices 17 dans la cavité 16 et s'évacue dans la veine secondaire 3. Ce faible débit d'air est prélevé au voisinage de la paroi externe de la veine primaire et contient la plus grande partie des particules, et notamment des gouttelettes d'eau introduites à l'entrée de la veine primaire 2, par suite de la courbure de la paroi externe de la veine primaire dans cette zone et du poids spécifique de ces particules.

Lorsque toutes les vannes 22 sont dans la position d'ouverture maximum, une plus grande quantité d'air est dirigée vers la veine primaire, par suite des différences de pression entre la zone de captage et la veine secondaire 3, et de la diminution des pertes de charge dans les tubes 20.

## Revendications

1. Turbomachine à double flux, notamment turboréacteur d'aviation à double flux, comportant entre la veine primaire (2) et la veine secondaire (3) un carter intermédiaire structural (9) disposé axialement entre un compresseur à basse pression (5) et un compresseur à haute pression (7), et comportant des moyens de décharge permettant la déviation d'une partie du flux gazeux délivré par le compresseur à basse pression (5) vers la veine secondaire (3), **caractérisée par le fait que** les moyens de décharge comportent une cavité annulaire (16) formant collecteur située en amont du carter intermédiaire (9) dans la paroi externe de la veine primaire (2) et en communication permanente avec la veine primaire (2), une pluralité de conduits sensiblement axiaux (18) ménagés dans le carter intermédiaire (9) et raccordés audit collecteur (16), et une pluralité de tubes (20) disposés autour du compresseur à haute pression (7) mettant en communication lesdits conduits (18) avec la veine secondaire (3), lesdits tubes (20) étant équipés de vannes de réglage de débit (22).

2. Turbomachine selon la revendication 1, **caractérisée par le fait que** le carter intermédiaire (9) et les conduits (18) sont réalisés en une seule pièce de fonderie ou mécanosoudée.

3. Turbomachine selon l'une des revendications 1 ou 2, **caractérisée par le fait que** le carter intermédiaire (9) comporte une pluralité de bras radiaux (15) et les conduits (18) sont disposés entre lesdits bras radiaux (15).

4. Turbomachine selon l'une quelconque des revendications 1 à 3, **caractérisée par le fait que** le collecteur (16) communique avec la veine primaire par une pluralité d'orifices (17) ménagés dans la paroi externe de la veine interne (2) et formant une grille.

5. Turbomachine selon l'une quelconque des revendications 1 à 4, **caractérisée par le fait que** les vannes de réglage de débit (22) sont réglables séparément.

## Claims

1. Bypass turbomachine, in particular a bypass turbojet engine of an aircraft, comprising between the primary flow path (2) and the secondary flow path (3) an intermediate structural casing (9) arranged axially between a low-pressure compressor (5) and a high-pressure compressor (7), and comprising bleed means for deflecting a portion of the gas stream supplied by the low-pressure compressor (5) towards the secondary flow path (3), **characterized in that** the bleed means comprise a manifold-forming annular cavity (16) situated upstream of the intermediate casing (9) in the external wall of the primary flow path (2) and in permanent communication with the primary flow path (2), a plurality of substantially axial ducts (18) formed in the intermediate casing (9) and connected to the said manifold (16), and a plurality of tubes (20) arranged around the high-pressure compressor (7) and bringing the said ducts (18) into communication with the secondary flow path (3), the said tubes (20) being equipped with flow-regulating valves (22).

2. Turbomachine according to Claim 1, **characterized in that** the intermediate casing (9) and the ducts (18) are produced as a single casting or welded part.

3. Turbomachine according to either of Claims 1 and 2, **characterized in that** the intermediate casing (9) comprises a plurality of radial arms (15) and the ducts (18) are arranged between the said radial arms (15).

4. Turbomachine according to any one of Claims 1 to 3, **characterized in that** the manifold (16) communicates with the primary flow path via a plurality of grid-forming orifices (17) formed in the external wall of the internal flow path (2).

5. Turbomachine according to any one of Claims 1 to 4, **characterized in that** the flow-regulating valves (22) can be adjusted separately.

## Patentansprüche

1. Zweikreis-Turbomaschine, insbesondere Zweikreis-TL-Triebwerk für Flugzeuge, das zwischen der Primärstrombahn (2) und der Mantelstrombahn (3) ein Aufbau-Zwischengehäuse (9) aufweist, das axial zwischen einem Niederdruckverdichter (5) und einem Hochdruckverdichter (7) angeordnet ist, und das Auslassmittel zur Ableitung eines Teils des von dem Niederdruckverdichter (5) abgegebenen Gasstroms zu der Mantelstrombahn (3) hin aufweist,
**dadurch gekennzeichnet,**
**dass** die Auslassmittel einen ringförmigen Hohlraum (16), der vor dem Zwischengehäuse (9) in der Außenwand der Primärstrombahn (2) eine Sammelleitung bildet, die in ständiger Verbindung zu der Primärstrombahn (2) steht, sowie eine Vielzahl von im Wesentlichen axial verlaufenden Leitungen (18), die in dem Zwischengehäuse (9) ausgeführt sind und mit dieser Sammelleitung (16) verbunden sind, sowie eine Vielzahl von Rohren (20), die um den Hochdruckverdichter (7) herum angeordnet sind, der diese Leitungen (18) mit der Mantelstrombahn (3) in Verbindung setzt, umfassen, wobei diese Rohre (20) mit Durchflussregelventilen (22) ausgerüstet sind.

2. Turbomaschine nach Anspruch 1,
**dadurch gekennzeichnet,**
**dass** das Zwischengehäuse (9) und die Leitungen (18) in einem Stück durch Gießen oder mechanisch geschweißt ausgeführt sind.

3. Turbomaschine nach einem der Ansprüche 1 oder 2,
**dadurch gekennzeichnet,**
**dass** das Zwischengehäuse (9) eine Vielzahl von radialen Armen (15) aufweist und die Leitungen (18) zwischen diesen radialen Armen (15) angeordnet sind.

4. Turbomaschine nach einem der Ansprüche 1 bis 3,
**dadurch gekennzeichnet,**
**dass** die Sammelleitung (16) mit der Primärstrombahn durch eine Anzahl von Öffnungen (17) kommuniziert, die in der Außenwand der inneren Strömungsbahn (2) ausgeführt sind und ein Gitter bilden.

5. Turbomaschine nach einem der Ansprüche 1 bis 4,
**dadurch gekennzeichnet,**
**dass** die Durchflussregelventile (22) getrennt einstellbar sind.
